# EUROPEAN PATENT APPLICATION

(11) **EP 3 557 052 A1**
(43) Date of publication of application: **23.10.2019**
(21) Application number: 18167492.0
(22) Date of filing: 16.04.2018
(51) Int. Cl.: F03D 80/80

(54) **TRANSFORMER SUPPORT FOR A WIND TURBINE**

(71) Applicant: Siemens Gamesa Renewable Energy A/S, 7330 Brande (DK)
(72) Inventor: Korsgaard, Soeren, 8670 Laasby (DK); Nesic, Nikola, 7100 Vejle (DK)
(74) Representative: Aspacher, Karl-Georg

(57) **Abstract**

A support structure (100) for a wind turbine (1) comprises:
a yaw structure (110) having a yaw interface (112) connectable to a tower (2) of the wind turbine (1) for allowing a rotation of the yaw structure (10) about a yaw axis (Z) of the wind turbine (1), and
a plurality of support brackets (120) for connecting a transformer (40) of the wind turbine (1) to the yaw structure (110), each support bracket (120) including at least a first plurality of threaded connections (130) for connecting the support bracket (120) to the yaw structure (110) and at least a second plurality of threaded connections (140) for connecting the support bracket (120) to the transformer (40).

## Description

### Field of invention

The present invention relates to the technical field of wind turbines. Specifically, the present invention relates to a support for a transformer attached to a nacelle of a wind turbine.

### Art Background

A wind turbine commonly comprises a rotor, a nacelle and a tower. The rotor is typically attached so as to be rotatable to the nacelle and the nacelle is ordinarily arranged on top of the tower. An electric generator is usually connected in the nacelle of the wind turbine. The wind interacts with the rotor of the wind turbine and rotates the rotor. The rotation of the rotor is transferred to the electric generator where the rotational energy is transformed into electrical energy. The electrical energy of the generator is generally transformed by a transformer to a certain predetermined voltage level. It is therefore known to arrange a transformer within the nacelle or the tower of the wind turbine.

Wind turbines can be erected on-shore or off-shore. Large wind turbines being capable of providing an electric power up to about 6MW are typically installed off-shore. As the power of off-shore wind turbines is increasing, so is the size of individual components, including transformer. A problem that occurs with the increase of transformer size is that it becomes increasingly difficult to support transformer with welded steel components in a way that could be both technically and financially feasible.
From a technical point of view, supporting transformer with welded or forged steel structure may pose great problem for manufacturing of components as even minor welding defects can have catastrophically influence on structural properties. Further, transformer mass has a big influence on the natural frequency of the structure. Thus it is required to increase stiffness and weight of the structure in order to avoid possibility of resonance in some of the wind turbine working conditions, adding to previously mentioned problems.
From a financial point of view, an increase in the complexity and weight of supporting structure results in higher costs. Offshore wind turbines are already heavily challenged on costs and using massive complex structure could make such costs unbearable.

Alternatively and particularly for smaller wind turbines, transformers are either supported by the steel-beam supporting structure inside the nacelle or moved to tower. The tower placed transformer results in increase of power loss due to longer transmission cables. Nacelle placed transformer will increases the structure cost but increase power output.
A further advantage for transformer placed in the nacelle structure is easiness of replacement. Further disadvantages are determined by high structure cost, which has to bear high forces and fatigue.

Therefore, there is still a need for providing a support for a transformer of a wind turbine, which may avoid or reduce the inconveniences described above with reference to the prior art.

### Summary of the Invention

There may be in particular a need for providing a support for a transformer of a wind turbine which meets the above mentioned requirements of avoiding any welded or forged connection, limiting costs, limiting power loss, improving the overall strength and fatigue resistance of the nacelle supporting structure.

This need may be met by the subject matter according to the independent claims. Advantageous embodiments of the present invention are described by the dependent claims.

According to a first aspect of the invention there is provided a support structure for a wind turbine comprising:
a yaw structure having a yaw interface connectable to a tower of the wind turbine for allowing a rotation of the yaw structure about a yaw axis of the wind turbine, and
a plurality of support brackets for connecting a transformer of the wind turbine to the yaw structure, each support bracket including at least a first plurality of threaded connections for connecting the support bracket to the yaw structure and at least a second plurality of threaded connections for connecting the support bracket to the transformer.
According to a second aspect of the invention there is provided a nacelle including the above described support structure.
According to a third aspect of the invention there is provided a wind turbine including such a nacelle.

The described support structure solves the scope of the present invention by supporting the transformer with a plurality of support brackets connected directly to main carrying component, i.e. the yaw structure, which provides the interface between the tower of the wind turbine and the nacelle for allowing the rotation of the yaw structure about a yaw axis of the wind turbine. The transformer is isolated from the rest of the rest of nacelle structure, as the supporting brackets are not connected with any other structural component of the nacelle, other than the yaw structure.
Advantageously, the support brackets may be manufactured as casted iron brackets.
In this way, the transformer is independent from the rest of the nacelle components and cannot transfer forces and moments to/from the yaw structure and other nacelle components.
In addition, with respect to the prior art, by having independent support of transformer, the present invention increases the natural frequency of the nacelle, thus avoiding risks with manufacturing complex welded components and reduce weight, costs and complexity.
Additionally, possibility arises for reduction of cost on transformer structure as loads from / to other components will not be transferred to it.

According to embodiments of the present invention, the first plurality of threaded connections are provided on a first surface of the support bracket and the second plurality of threaded connections are provided on a second surface of the support bracket, the first surface and the second surface being not parallel to each other.
In particular the first surface and the second surface are orthogonal to each other.
According to other embodiments of the present invention, the first plurality of threaded connections is oriented orthogonal to the yaw axis of the wind turbine.
According to the above or other embodiments of the present invention, the second plurality of threaded connections is oriented parallel to the yaw axis of the wind turbine. Advantageously, the above described orientation of the threaded connections and of the surfaces of the support brackets, where the threaded connections are active, provides a convenient support of the transformer, in order to achieve the purpose of the present invention.

According to embodiments of the present invention, the yaw structure includes a coupling interface to be coupled to the first plurality of threaded connections, the coupling interface being provided on a rear side of the yaw structure, opposite to the wind rotor of the wind turbine. Advantageously, such geometry provides an efficient positioning of the transformer, in particular with respect of the electrical generator of the wind turbine, and an efficient weight balancing of the nacelle.

### Brief Description of the Drawing

- Figure 1: shows a schematic section of a wind turbine including a transformer support structure for a wind turbine according to the present invention.
- Figure 2: shows a schematic back view of the transformer support structure according to the present invention.
- Figure 3: shows a schematic lateral view of the transformer support structure of figure 2.
- Figure 4: shows an axonometric simplified view of the transformer support structure according to the present invention.
- Figure 5: shows a magnified view of the detail V of figure 3.

### Detailed Description

The illustrations in the drawings are schematic. It is noted that in different figures, similar or identical elements are provided with the same reference signs.

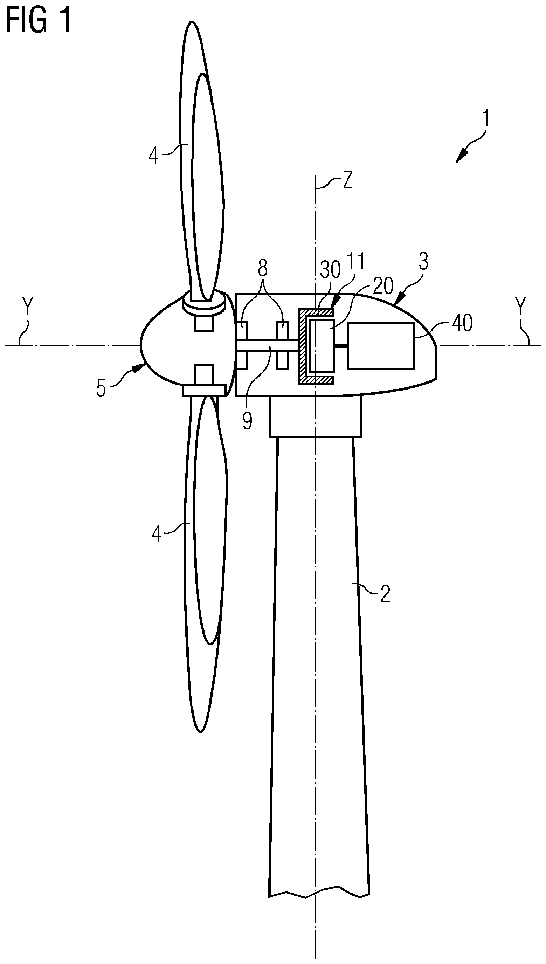

Figure 1 shows a wind turbine 1 according to the invention. The wind turbine 1 comprises a tower 2, which is mounted on a non-depicted foundation. A nacelle 3 is arranged on top of the tower 2. In between the tower 2 and the nacelle 3 there is provided a yaw angle adjustment device, which is capable of rotating the nacelle around a vertical yaw axis Z.
The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y.
The blades 4 extend substantially radially with respect to the rotational axis Y.
In general, when not differently specified, the terms axial, radial and circumferential in the following are made with reference to the rotational axis Y.

The wind turbine 1 comprises an electric generator 11, including a stator 20 and a rotor 30. The rotor 30 is rotatable with respect to the stator 20 about the rotational axis Y. The wind rotor 5 is rotationally coupled with the electric generator 11 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.
On a rear side rear side of the nacelle 3, opposite to the wind rotor 5, a transformer 40 is provided. The transformer 40 is electrical connected to the generator 11 to transform the electrical output of the generator 11 to a certain predetermined voltage level. According to other embodiments of the present invention (not represented) the nacelle 3 includes more than one transformer 40, for example two transformers 40.

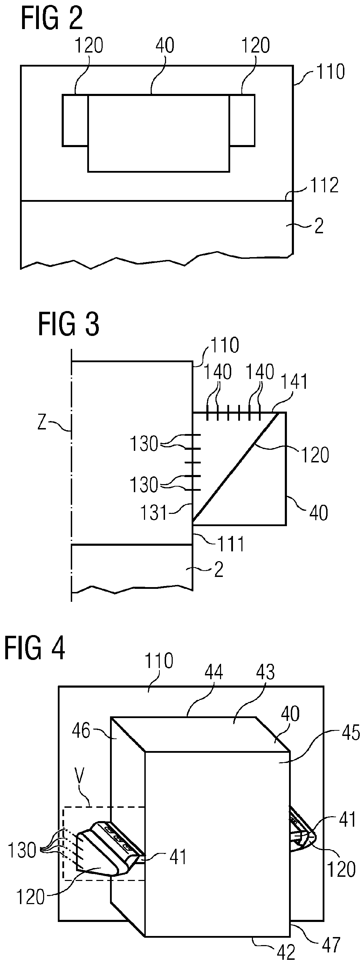

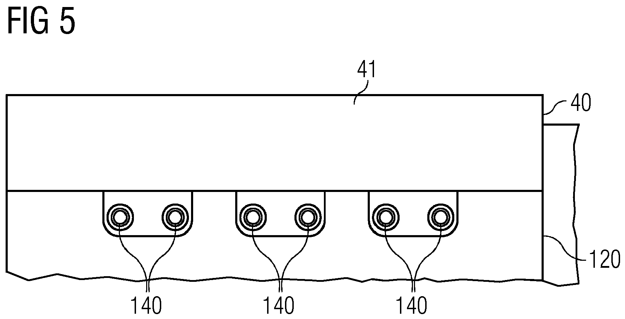

**Figures 2** to **5** shows in more detail a first embodiment of a support structure 100 included in the nacelle 2 of the wind turbine 1. The support structure 100 comprises a yaw structure 110 having a yaw interface 112 connectable to the tower 2 for allowing a rotation of the yaw structure 110 and therefore of the nacelle 2 about the yaw axis Z. The support structure 100 further comprises a plurality of support brackets 120 for connecting a transformer 40 of the wind turbine 1 to the yaw structure 110.
Each support bracket 120 includes at least a first plurality of threaded connections 130 for connecting the support bracket 120 to the yaw structure 110 and at least a second plurality of threaded connections 140 for connecting the support bracket 120 to the transformer 40.
According to embodiments of the present invention, the first and the second plurality of threaded connections 130, 140 may comprise bolt or screw or stud connections.
The brackets 120 are made of casted iron.

The first plurality of threaded connections 130 are provided on a first surface 131 of the support bracket 120 and the second plurality of threaded connections 140 are provided on a second surface 141 of the support bracket 120.
In embodiment of the attached figures, the first surface 131 and the second surface 141 are orthogonal to each other. According to other embodiments of the present invention (not represented) the first surface 131 and the second surface 141 are not parallel to each other and inclined with respect to each other of an angles different from a right angle.
The yaw structure 110 includes a coupling interface 111 to be coupled to the first plurality of threaded connections 130, in order to fix the support brackets 120 to the yaw structure 110. The threaded connections 130 provide in particular the fixing connection between the first surface 131 of each support bracket 120 and the coupling interface 111 of the yaw structure 110.
According to embodiments of the present invention, the coupling interface 111 may be constituted by one or more surfaces, in particular plane surfaces, provided on the yaw structure 110
The coupling interface 111 is provided on a rear side of the yaw structure 110, opposite to a rotor interface of the yaw structure 110 connectable to the wind rotor 5. The connection between the yaw structure 110 and the wind rotor 5 allows the rotation of the wind rotor 5 about the rotational axis Y.
The transformer 40 has a typical parallelepiped shape with a bottom base 42 and a top base 43 and four lateral surfaces faces 44, 45, 46, 47.
A first lateral face 44 faces the yaw structure 110 and in particular the coupling interface 111. A second lateral face 45 is parallel and opposite to the first lateral faces. A third lateral face 46 and a forth lateral face 47 are parallel to each other and orthogonal to the first lateral face 44 and the second lateral face 45. The third lateral face 46 and the forth lateral face 47 are respectively adjacent to two support brackets 120.

According to other embodiments of the present invention (not represented) the transformer 40 has a different shape, for example one or more faces may be inclined with respect to other one or more faces of angles different from a right angle.
The transformer 40 includes two flanges 41 respectively protruding from the third lateral face 46 and the forth lateral face 47. Each flange 41 is coupled with the second surface 141 of a respective support bracket 120 by means of the second plurality of threaded connections 140.
The threaded connections 140 fix the transformer 40 and, in particular, the flanges 41 to the support brackets 120.
In the embodiment of the attached figures the first plurality of threaded connections 130 are oriented orthogonal to the yaw axis Z of the wind turbine 1 and the second plurality of threaded connections 140 are oriented parallel to the yaw axis Z of the wind turbine 1. Consequently, the first plurality of threaded connections 130 and the second plurality of threaded connections 140 are oriented orthogonal to each other.
According to other embodiments of the present invention (not represented), the first plurality of threaded connections 130 and the second plurality of threaded connections 140 may have a different orientation with respect to the yaw axis Z.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A support structure (100) for a wind turbine (1) comprising:
a yaw structure (110) having a yaw interface (112) connectable to a tower (2) of the wind turbine (1) for allowing a rotation of the yaw structure (110) about a yaw axis (Z) of the wind turbine (1), and
a plurality of support brackets (120) for connecting a transformer (40) of the wind turbine (1) to the yaw structure (110), each support bracket (120) including at least a first plurality of threaded connections (130) for connecting the support bracket (120) to the yaw structure (110) and at least a second plurality of threaded connections (140) for connecting the support bracket (120) to the transformer (40).

2. The support structure (100) of claim 1, wherein the plurality of brackets (120) are casted.

3. The support structure (100) of claim 1 or 2, wherein the first plurality of threaded connections (130) are provided on a first surface (131) of the support bracket (120) and the second plurality of threaded connections (140) are provided on a second surface (141) of the support bracket (120), the first surface (131) and the second surface (141) being not parallel to each other.

4. The support structure (100) of claim 3, wherein the first surface (131) and the second surface (141) are orthogonal to each other.

5. The support structure (100) of any of the preceding claims, wherein the yaw structure (110) includes a coupling interface (111) to be coupled to the first plurality of threaded connections (130), the coupling interface (111) being provided on a rear side of the yaw structure (110), opposite to a rotor interface (113) of the yaw structure (110), the rotor interface being connectable to a wind rotor (5) of the wind turbine (1) for allowing a rotation of the wind rotor (5) about a rotational axis (Y) of the wind turbine (1).

6. The support structure (100) of any of the preceding claims, wherein the first plurality of threaded connections (130) are oriented orthogonal to the yaw axis (Z) of the wind turbine (1).

7. The support structure (100) of any of the preceding claims, wherein the second plurality of threaded connections (140) are oriented parallel to the yaw axis (Z) of the wind turbine (1).

8. A nacelle (3) of a wind turbine (1) including a support structure (100) according to any of the preceding claims and at least one transformer (40).

9. The nacelle (3) of claim 8, wherein the transformer (40) includes a plurality of flanges (41), each flange (41) being coupled to a respective support bracket (120) by means of the second plurality of threaded connections (140).

10. A wind turbine (1) including a nacelle (3) according to the previous claim.
